Europäisches Patentamt

European Patent Office

Office européen des brevets

(11) Publication number: **0 120 146
B1**

# EUROPEAN PATENT SPECIFICATION

(45) Date of publication of patent specification: **27.08.86**

(21) Application number: **83200432.9**

(22) Date of filing: **28.03.83**

(51) Int. Cl.⁴: **H 02 J 9/06,** H 02 M 1/10 // B66D5/30

(54) **An apparatus for emergency supply of an electrically driven tool.**

(43) Date of publication of application:
**03.10.84 Bulletin 84/40**

(45) Publication of the grant of the patent:
**27.08.86 Bulletin 86/35**

(84) Designated Contracting States:
**DE FR GB NL**

(56) References cited:
**DE-B-1 588 793
FR-A-2 218 673
GB-A-1 440 240
US-A-3 769 571**

**SIEMENS ZEITSCHRIFT, vol. 39, no. 6, June 1965, pages 623-633, Erlangen, DE. A. WOLSKI: "Thyristoren in Bahntriebfahrzeugen"**

(73) Proprietor: **Van Rietschoten & Houwens Elektrotechnische Maatschappij B.V.
Sluisjesdijk 155 Postbus 5054
NL-3008 AB Rotterdam (NL)**

(72) Inventor: **Van Veenendaal, Frans Albertus
Trompetstraat 88
NL-2611 KP Delft (NL)**

(74) Representative: **Kooy, Leendert Willem et al
OCTROOIBUREAU VRIESENDORP & GAADE
P.O. Box 266
NL-2501 AW The Hague (NL)**

Courier Press, Leamington Spa, England.

# Description

The invention relates to an apparatus for emergency power supply of an electrically energized tool comprising a terminal means for connection to the mains network, a battery means with a battery charging device connected to said terminal means, a controller for controlling the energization of said tool, a monitor means for monitoring said tool energization from the mains network having an output indicating failure of energization from the mains network, and a switching device with a selector switch for connecting the battery into said tool energization having an input for said monitor means output.

A similar apparatus is known. In the known apparatus the said tool is for example an electrically energized brake comprised in a hoisting machine. Its performance is adaptable to the circumstances by means of said controller. In an emergency, so when energization from the mains network fails, the output of the monitor means indicating the emergency condition connects the tool, specifically the brake, directly to the battery on standby. The battery applies a working voltage corresponding with the mains voltage and switching to emergency energization consequently causes a 100% performance of the brake.

It is an object of the invention to switch from the energization from the mains network to energization from the emergency power supply in a substantially imperceptible way from the point of view of performance.

According to the invention said object is attained in that in said switching device with said selector switch for connecting the battery means into said tool energization a further switch is ganged in order to connect the battery means into the energization of said controller and in that in the energization line of said tool from said battery an element for controlling the power passed along the energization line is included, the said element being itself controlled by said controller.

The invention is elucidated by a description of an embodiment. The description refers to a drawing.

The one figure shows a diagram of the embodiment.

Into a branch line 13 of a busbar system 11 carrying the mains voltage, a tool 10, for example a brake of a hoisting machine, is connected with the interconnection of a controlled rectifier bridge 6 and a diode 17. A current or voltage sensing means 19 is interconnected between the controlled rectifier bridge 6 and the diode 17.

In another branch line 20 an emergency power supply battery 22 is included via a charging device 7.

Furthermore in a branch line 21 of the busbar system 11 a controller 9 is connected via one layer of a tandem switch 8. An output of the controller 9 is connected via a line 16 to an electronic control circuit 1 for controlling the controlled rectifier bridge 6 and to a monitor means 2 which furthermore receives the signal at the output 15 of the current or voltage sensing means 19. A signalling means 3, for example consisting of a signal light, is connected to the monitor means 2.

A further busbar system 12 is connected to the battery 22 and is capable of energizing the tool 10 in a branch line 14 via a chopper 5 and a diode 18. A control means in the chopper 5 is connected to the output of a further electronic control circuit 4.

The control circuit 4 receives an output signal of the monitoring means 2 to be actuated and the signal at the output 16 of controller 9 to determine the correct adjustment of the chopper 5.

In addition the energization of the controller 9 is provided from the busbar system 12 via a converter 23 and the second layer of the tandem switch 8.

Tandem switch 8 is connected to the monitoring means to be controlled.

Diodes 17 and 18 serve to isolate the tool's normal power supply from its emergency power supply.

In normal operation the tool, for example a brake in a hoisting machine, is fed from the mains by means of busbar system 11 and controlled from controller 9 via electronic control circuit 1. Also battery means 22 is kept in charged condition by means of charging device 7. Via the output of sensing means 19 monitor means 2 monitors whether either electric current or electric voltage to energize tool 10 are satisfactory that is at the level set in controller 9.

When detecting a deviation which is greater than a predetermined amount two operative modes of operation are possible dependent on the type of disturbance.

1. The deviation is due to failure of the mains.

The emergency power supply takes over energization of tool 10, energization of controller 9 and the setting of controller 9, so that the switch from normal operation to emergency operation does not affect the continuity. The monitor means 2 actuates electronic control circuit 4 and reverses switch 8.

After the mains power supply is restored, monitor means 2 switches automatically as soon as controller 9 is in its zero position, energization of tool 10, energization of controller 9 and the setting of the controller 9 back to normal operative conditions.

2. The deviation is due to a fault in either the electronic control circuit 1 or in the controlled rectifier bridge 6.

The emergency power supply takes over the energization of tool 10 and the setting of controller 9, so that there can be switched without any discontinuity from normal operation to emergency operation. After repair of said fault the monitor means 2 switches as soon as controller 9 is in its zero position, the energization of tool 10 and the setting of the controller back to normal operative conditions.

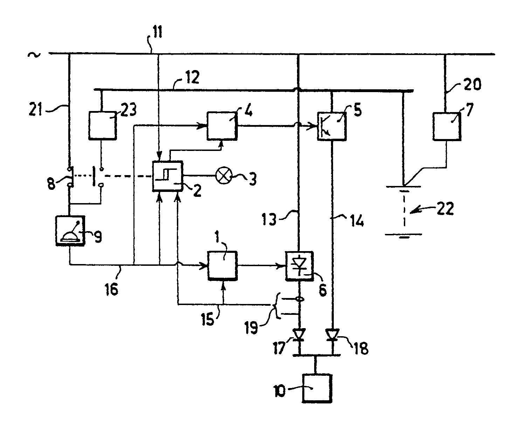

## Claim

An apparatus for emergency power supply of an electrically energized tool (10) comprising a terminal means (11) for connection to the mains network, a battery means (22) with a battery charging device (7) connected to said terminal means (11), a controller (9) for controlling the energization of said tool (10), a monitor means (2) for monitoring said tool energization from the mains network having an output indicating failure of energization from the mains network, and a switching device with a selector switch for connecting the battery means (22) into said tool energization having an input for said monitor means output (2), characterized in that in said switching device with said selector switch for connecting the battery means (22) into said tool energization a further switch (8) is ganged in order to connect the battery means into the energization of said controller (9) and in that in the energization line (14) of said tool (10) from said battery means (22) an element (5) for controlling the power passed along the energization line (14) is included, the said element (5) being itself controlled by said controller (9).

## Patentanspruch

Apparat für Notstromversorgung eines elektrisch erregten Werkzeuges (10), das besteht aus einem Speisenetzanschluss (11), einer Batterie (22) mit einer Aufladungseinrichtung (7), die an den Netzanschluss (11) angeschlossen ist, einem Kontroller (9) für die Steuerung der Erregung des Werkzeuges (10), einer Überwachungseinheit (2) für die Überwachung der Erregung des Werkzeuges (10) aus dem Netz mit einem Ausgangssignal, das den Ausfall der Erregung aus dem Netz anzeigt, und einer Umschalteinrichtung mit einem Schalter für die Einschaltung der Batterie in der Erregung des Werkzeuges mit einem Eingang für das Ausgangssignal der Überwachungseinheit, dadurch gekennzeichnet, dass in der Umschalteinrichtung mit dem Schalter für das Einschalten der Batterie ein Schalter (8) gekuppelt ist für die Einschaltung der Batterie in der Erregung des Kontrollers (9), und dass in den Erregungsanschluss (14) des Werkzeuges (10) an die Batterie (22) ein Element (5) für die Bestimmung des Zufuhrs von Energie, die langs dem Erregungsanschluss (14) geleitet wird, aufgenommen worden ist, wobei das Element (5) selber durch den Kontroller (9) gesteuert wird.

## Revendication

Appareil pour l'alimentation de secours d'un outil excité électriquement (10) comprenant un moyen formant borne (11) pour raccordement au réseau de distribution, un moyen formant batterie (22) ainsi qu'un dispositif chargeur de batterie (7) relié audit moyen formant borne (11), un régulateur (9) de réglage de l'alimentation dudit outil (10), un moyen de surveillance (2) pour la surveillance de l'alimentation dudit outil à partir du réseau de distribution émettant un signal de sortie indiquant une panne d'alimentation à partir du réseau de distribution, et un dispositif de commutation comportant un sélecteur pour l'affectation du moyen formant batterie (22) à l'alimentation dudit outil présentant une entrée pour ledit signal de sortie du moyen de surveillance (2), caractérisé en ce que, dans ledit dispositif de commutation comportant ledit sélecteur d'affectation du moyen formant batterie (22) à l'alimentation de l'outil, un commutateur supplémentaire (8) est jumelé en vue d'affecter le moyen formant batterie à l'alimentation dudit régulateur (9) et en ce que sur la ligne (14) d'alimentation dudit outil (10) à partir dudit moyen formant batterie (22) est interposé un élément (5) de réglage de l'énergie empruntant la ligne d'alimentation (14), ledit élément (5) étant lui-même réglé par ledit régulateur (9).